# EUROPEAN PATENT SPECIFICATION

(11) **EP 0 987 221 B1**
(45) Date of publication and mention of the grant of the patent: **03.01.2007**
(21) Application number: 99116182.9
(22) Date of filing: 24.08.1999
(51) Int. Cl.: C01D 3/16, C01D 3/14

(54) **Method of purification of salt solutions for electrolysis by removing iodine- and/or silicate anions by anion exchange, using zirconium hydroxide as anion exchanger**
Verfahren zur Entfernung von Iodid- und/oder Silikatanionen aus Salzlösungen für die Elektrolyse durch Anionenaustausch an Zirkoniumhydroxid
Méthode de purication de saumure pour l'électrolyse par enlèvement d'anions d'iodure et de silicates par échange d'anions sur de l'hydroxide de zirconium

(30) Priority: 28.08.1998 JP 25942698
(43) Date of publication of application: 22.03.2000
(73) Proprietor: CHLORINE ENGINEERS CORP., Ltd., Koto-Ku Tokyo 135-0033 (JP)
(72) Inventor: Oohara. Chisako, Kurashiki-city, Okayama 709-1121 (JP); Matsuoka, Terumi, Okayama-city, Okayama 702-805 (JP); Kishi, Takamichi, Okayama-city, Okayama 700-0941 (JP); Okuno, Takako, Fukuyama-city, Hiroshima 720-0073 (JP)
(74) Representative: HOFFMANN EITLE

(56) References cited:
- EP-A- 0 427 256
- EP-A- 0 659 686
- EP-A- 0 699 628
- US-A- 4 483 754
- US-A- 5 464 603
- PATENT ABSTRACTS OF JAPAN vol. 1997, no. 07, 31 July 1997 (1997-07-31) & JP 09 086922 A (KANEGAFUCHI CHEM IND CO LTD), 31 March 1997 (1997-03-31)
- SAIKI K ET AL: "NEW DESULFACTION SYSTEM FOR CHLOR-ALKALI PLANT" MODERN CHLOR-ALKALI TECHNOLOGY, vol. 6, page 82-88 XP000562462
- PATENT ABSTRACTS OF JAPAN vol. 1996, no. 04, 30 April 1996 (1996-04-30) & JP 07 328432 A (TOAGOSEI CO LTD), 19 December 1995 (1995-12-19)

## Description

### BACKGROUND OF THE INVENTION

### Field of the Invention

The present invention relates to a method of purification of salt solutions to be subjected to electrolysis, and more particularly to a method of removing iodine and silica ions in the salt solutions in which iodine and silica ions which are contained in the salt solutions and give adverse effects on electrolysis are removed by using zirconium hydroxide.

### Description of the Related Art

It has been known that when salt solutions (brine) is subjected to electrolysis by using an ion exchange membrane method, iodine ions of around 1 ppm (weight) and silica ion of 10 to 20 ppm (weight) contained in the raw salt solutions give adverse effects on electrolysis performance, and in order to overcome such a trouble, various methods have been hitherto used to remove iodine and silica ions contained in the salt solutions to be electrolyzed. For example, an ion exchange method as disclosed in Japanese Laid-open Patent Application No. Hei-7-237919, an activated carbon adsorption method as disclosed in Japanese Post-examined Patent Application No. Hei-7-91666, sedimentation method as disclosed in Japanese Post-examined Patent Application No. Hei-6-88777, etc. have been proposed as a method of removing iodine ions from the salt solutions.

As for the silica ion removal method from salt solutions, there has been proposed magnesium ion addition method in Japanese Post-examined patent application No. Sho-55-3290, etc., primary refined sedimentary slurry circulation method in Japanese Post-examined patent application No. Sho-59-43556, etc. and chelating resin adsorption method in Japanese Laid-open patent application No. Sho-60-125388, etc. and so forth.

However, it has been found that the above conventional methods have the following disadvantages.

According to the ion exchange method as disclosed in Japanese Laid-open Patent Application No. Hei-7-237919, iodine ions are oxidized into iodine complex ions, and then the iodine complex ions thus obtained are removed through ion exchange by using anion exchange resin to thereby removing the iodine ions from the salt solutions. However, it is difficult to surely control the oxidation of iodine ions to iodine complex ions. For example, iodate ions are also produced as one type of oxidized products obtained by oxidizing iodine ions. However, these ions cannot be adsorbed by the anion exchange resin. Therefore, when iodate ions are produced, some of iodine ions remain in the salt solutions even when the salt solutions are passed through the anion exchange resin. Accordingly, this method has a low removal rate of iodine ions, and it is difficult to reduce the concentration of the iodine ions down to 0.2mg/l or less which is required in the ion exchange membrane electrolysis process.

In the activated carbon adsorption method as disclosed in Japanese Post-examined Patent Application No. Hei-7-91666, it is difficult to surely control the oxidation of iodine ions to iodine complex ions. In addition, the iodine complex ions thus produced are reduced into iodide ions by activated carbon, and the adsorption rate is reduced.

According to the sedimentation method as disclosed in Japanese Post-examined Patent Application No. Hei-6-88777, iodine ions are oxidized into periodate ions to form and deposit periodate which is hardly dissolved, thereby removing the iodine ions. However, this method has also a low removal rate of iodine ions.

As for the above disclosed references on silica ion removal, the magnesium ion addition method in Japanese Post-examined patent application No. Sho-55-3290 relates to the method to remove silica ion through adsorption by magnesium hydroxide ion produced by adding magnesium chloride solution to the raw salt solutions but needs further improvement because of higher cost to dispose the salt solution mud generated by addition of a lot of magnesium hydroxide.

On the other hand, primary refined sedimentary slurry circulation method in Japanese Post-examined patent application No. Sho-59-43556 relates to the method to facilitate formation of silica salts through reaction with silica ion by circulation of a portion of the primary refined sedimentary slurry of calcium carbonate or magnesium hydroxide, etc. condensed in a sedimentation vessel but cannot be applied for the case of a higher removal rate required because it cannot achieve a higher removal rate down to less than 2 ppm (weight) as SiO₂.

Furthermore, chelating resin adsorption method in Japanese Laid-open patent application No. Sho-60-125388 relates to the method to treat salt solutions by a strong cationic micro-porous type chelating resin under a slightly acidic condition but cannot be applied for cases needed a higher removal rate because of its lower removal rate if compared with the above two methods.

JP09086922 A discloses a method of purifying salt solutions by removing sulfate ions, which comprises the step of contacting the impure salt solutions with zirconium hydroxide at an acidic pH = 1-5. In a second step the adsorbent is brought into contact with an aqueous solution with a pH value of higher (pH=8-12) than the pH value in said adsorption step. The process is conducted in a single vessel.
EP0427256, EP0699628 and K. Saiki, N. Yoshida, M. Silver and I. Kumagai, Modern Chlor.Alkali Technology, 1995, vol. 6, page 82-88 are concerned with the elimination of sulfate ions from brines prior electrolysis of said brine, by anion exchange in presence of zirconium hydroxide.
The US5464603 discloses a method for removing iodide from aqueous solutions in which the iodide is converted to iodine. The porous granules of the polyvalent metal chelating resin containing zirconium peroxide bound to the chelating groups thereof is contacted with the aqueous iodide solution. The iodine is formed within the pores of said zirconium peroxide and retained therein in order to be eluated later on with an organic solvent. US4483754 discloses in general suitable processes for deiodination of the starting material NaCl aqueous solution down to a content of not more than 1 ppm iodine including for example, adsorption by active carbon or anion exchange resin, or by oxidation and stripping.

### SUMMARY OF THE INVENTION

The inventors of this application have reviewed the disadvantages of various conventional methods containing the above methods, and have made earnest studies and considerations to develop a method of removing iodine and silica ions from salt solutions which can overcomes the disadvantages of the prior arts and removes iodine and silica ions from the salt solutions at a high removal rate, and also which is stable, economical and industrially highly practically usable. As a result, the inventors have found that iodine and silica ions are effectively adsorbed by zirconium hydroxide under a predetermined condition, and the iodine and silica ions thus adsorbed are desorbed from the zirconium hydroxide under a predetermined condition, and completed the present invention.

According to the present invention, there is provided a method of removing ions of impurities in salt solutions for electrolysis in which the salt solutions containing the ions of impurities and zirconium hydroxide are treated in contact with each other under acidic condition to adsorb and remove the ions of impurities. This method of the present invention can preferably applied for the salt solution containing iodine and/or silica ions as the impurities.

More specifically according to the present invention, there is provided a method of removing iodine and/or silica ions as impurities in the salt solutions for electrolysis comprises (1) an adsorbing step of bringing the salt solutions containing iodine and/or silica ions into contact with zirconium hydroxide under acidic condition to adsorb and remove the iodine and/or silica ions, and (2) a desorbing step of bringing the zirconium hydroxide adsorbing the iodine and/or silica ions into contact with an aqueous solution of a higher pH value than the pH value in the adsorbing step to desorb the adsorbed iodine and/or silica ions from the zirconium hydroxide, and (3) conducting the above adsorbing and desorbing steps alternately in a single vessel or each of both steps continuously in separate vessels.

In the above method of removing ions of impurities, for example typically iodine and/or silica ions in salt solutions for electrolysis, it is preferable that the adsorbing step and the desorbing step are sequentially performed in different treatment vessels while zirconium hydroxide is circulated between these steps. The method of removing impurities in the salt solutions for electrolysis according to the present invention can be also applied for the treatment of salt solutions having neutral and/or colloidal silica through a pre-treatment wherein neutral and/or colloidal silica are converted to silicic ion.

It has been known that there are non-dissociative neutral silica or colloidal silica besides the above silicic acid ion as soluble silica. The present invention can be preferably applied to removal of the silicic acid ion. In case salt solution contains much amount of non-dissociative neutral silica, silica ion can be removed by means of conversion of the non-dissociative neutral silica or colloidal silica into the silicic acid ion through pretreatment of the salt solution that makes it alkaline. Therefore the method incorporating alkaline processing step as a pre-treatment to the above method of removing ions of impurities in the salt solutions for electrolysis is involved in the scope of the present invention.

As ions of impurities in salt solutions to be subjected to electrolysis which give adverse effects on the electrolytic processing, there are counted iodine, silica, sulfate, chlorate, calcium, magnesium, strontium, barium, aluminum, iron, nickel, etc. The present invention can be applied for the salt solutions containing these impurities. However, since iodine and silica ions, of these, are governing, detailed description of the present invention shall be mainly made with iodine and silica.

In the present invention, the term of iodine ions covers iodide ion (I), iodine complex ion (I³⁻), iodate ion (IO³⁻), periodate ion (IO⁴⁻, IO₆⁵⁻), etc. And silica ion means soluble and dissociated silicic acid ion (SiO₃²⁻).

According to the present invention, salt solution containing iodine and silica ions at concentration of a ppm order are brought into contact with zirconium hydroxide having excellent adsorption performance to iodine and silica ions in a suitable manner (under a predetermined condition), so that iodine and silica ions in the salt solutions can be removed with high efficiency and stability for their purification.

Further, the iodine and/or silica ions adsorbed on the zirconium hydroxide can be desorbed from the zirconium hydroxide by a proper treatment, and thus the zirconium hydroxide can be recycled. Therefore, zirconium hydroxide can be repetitively used for the adsorption and desorption of iodine and/or silica ions, and thus iodine and/or ions in the salt solutions can be efficiently removed without increasing the cost.

Still further, the adsorption and the desorption of iodine and/or silica ions can be alternately or sequentially repeated and thus iodine and/or silica ions contained in the salt solutions can be stably removed.

Zirconium hydroxide used as adsorbent for iodine and/or silica ions can also adsorb iodate ions and periodate ions efficiently, and thus the method of the present invention can remove iodine ions more efficiently than the conventional methods.

### DETAILED DESCRIPTION OF THE PREFERRED EMBODIMENTS

In advance of describing preferred embodiments of the present invention, the basic concept of the present invention will be described in detail.

In the present invention, iodine and/or silica ions in salt solutions are adsorbed by zirconium hydroxide to remove the iodine and/or silica ions from the salt solutions. The use manner of zirconium hydroxide to adsorb iodine and/or silica ions is not limited to a specific one, and powder type or granular type may be used just as it is (this type of zirconium hydroxide is hereinafter referred to as "zirconium hydroxide alone"). Besides, it may be used while being supported on ion exchange resin (this type of ion exchange resin is hereinafter referred to as "zirconium-hydroxide ion exchange resin"). When zirconium hydroxide is used just as it is, no restriction is imposed on its composition (the content of zirconium). However, when it contains a large amount of water, it may be repetitively unusable because its mechanical strength is low. Accordingly, in order to enable repetitively use and recycle zirconium hydroxide for adsorption and desorption of iodine and/or silica ions, it is preferable that zirconium hydroxide contains water whose amount is equal to 40 weight % or less. Here, "water" contained in zirconium hydroxide means variation in weight when zirconium hydroxide to which water is adhered is ignited to be decomposed into zirconium dioxide.

When zirconium hydroxide is supported on ion exchange resin, this mode is preferable because it is more readily handled. Any one of strongly acidic cation exchange resins, weakly-acidic cation exchange resins and chelating resins may be selectively used as the ion exchange resin supporting zirconium hydroxide thereon. The anion exchange resins have a lower supporting efficiency of zirconium hydroxide and adsorb/desorb chloride ions, so that selectivity of adsorption of iodine and/or silica ions is lost. Therefore, use of the anion exchange resin is unfavorable.

Further any one of or both so-called gel type and micro-porous type, which are classified in accordance with the surface state, may be used for the ion exchange resin on which zirconium hydroxide is supported. Although the gel-type resin has a lower adsorption/desorption rate for iodine and/or silica ions than the macro-porous type resin because the surface area thereof is smaller, it can be used by selecting a suitable condition. Further, it is preferable to use granular type ion exchange resin having an average particle size of 100 to 1200 µm. If the average particle size is smaller than 100 µm, it is cumbersome to handle the resin. On the other hand, if the average particle size is larger than 1200 µm, the adsorption rate and the desorption rate of iodine and/or silica ions are reduced.

Zirconium hydroxide may be supported on the above ion exchange resins by the following method. Aqueous solution containing zirconyl ion and ion exchange resin are brought into contact with each other to change functional groups of the ion exchange resin to zirconyl type functional group, and then further brought into contact with aqueous solution containing hydroxide ions such as ammonia, caustic alkali metal, calcium hydroxide, tetraalkylammonium hydroxide or the like. In this case, the optimal alkali aqueous solution may be used in comprehensive consideration of safety, the effect on environments when it is disposed, cost efficiency, use condition, etc. For example, ammonia has an advantage that a small amount of ammonium ion reacts with zirconium hydroxide because it is weak base, and thus it can be easily removed from zirconium hydroxide. Therefore, ammonia would be preferable. However, it has a disadvantage that its price is higher than caustic soda, and also nitrogen subjected to waste water regulation may get into waste water at high concentration. On the other hand, caustic soda has a disadvantage that it has a lot of sodium ion which react with zirconium hydroxide because it is strong base, and thus it cannot be removed from zirconium hydroxide unless it is set under acidic condition. However, it has an advantage that its price is lower than ammonia and there is little problem in control of the waste water.

The amount of zirconium hydroxide supported on the ion exchange resin is suitably selected so as to be adapted to the desired treatment capability, that is, the absorption capability of iodine and/or silica ions in accordance with the treatment conditions such as the type of the ion exchange resin, the treatment capacity, the amount of the salt solutions to be treated, etc. The supported amount of zirconium hydroxide can be adjusted by changing the frequency of the step of making zirconium hydroxide be supported on the ion exchange resin. The frequency of the supporting step is not limited to an unique value, and the optimal frequency is selected in accordance with the type of the ion exchange resin, the amount of zirconium hydroxide to be supported on the ion exchange resin (hereinafter referred to as "zirconium-hydroxide supporting ion exchange resin"), the concentration of zirconyl ion, etc. According to the knowledge of the inventors, the capability of adsorbing iodine and/or silica ions (defined as a gram value of iodine and/or silica ions adsorbed per ion exchange resin of one liter) is liable to be enhanced as the supporting frequency increases. As the iodine and/or silica ions adsorption capability is enhanced, the amount of ion exchange resin which needs to treat a fixed amount of iodine and/or silica ions in a fixed time is reduced, and thus the capacity of facilities for the treatment, etc. can be reduced. Therefore, this is favorable. However, the increase of the supporting frequency causes increase of the amount of zirconium compounds and alkali which are needed for the supporting step, resulting in increase of manufacturing cost. Accordingly, the supporting frequency must be determined on the basis of the comprehensive judgment such as the manufacturing cost, the facilities cost, etc. For example, when zirconium hydroxide is supported on strongly acidic cation exchange resin, in order to complete the treatment with only one supporting step, large-scaled facilities and a large amount of resin are needed because the iodine and/or silica ions adsorption capability is low. Therefore, this step is unfavorable. On the other hand, in order to complete the above treatment with three or more supporting steps, it is impossible to reduce the scale of the facilities and the amount of resin being used to the level, which meets the supporting, cost. Therefore, this step is also unfavorable. Accordingly, it is most preferable that the frequency of the supporting step is equal to 2.

According to the knowledge of the inventors of the present invention, it has been found that zirconium hydroxide plays an excellent performance to remove iodate ion and periodate ion when it is used just as it is (i.e., it is used alone), and also plays an excellent performance to remove iodide ion, iodate ion and periodate ion when it is used while supported on resin. That is, a using manner of zirconium hydroxide serving as adsorbent can be suitably selected in accordance with the form of iodine ions contained in salt solutions to be treated.

For example, iodine ions contained in so-called well brine used in U.S.A., etc. mainly exist as iodide ions. In this case, zirconium-ion-supported ion exchange resin may be used. Besides, these ions may be further oxidized into iodate ion by chlorine, salt of hypochlorite, bromine or the like, whereby any of zirconium hydroxide alone or zirconium-hydroxide-supporting ion exchange resin can be used.

Further, in a so-called fresh salt solutions processing from anion exchange membrane electrolytic tank, iodine ions mainly exist as iodate ion or periodate ion, and any one of zirconium hydroxide alone and zirconium-hydroxide supporting ion exchange resin may be selectively used. As described above, the method of removing iodine ions in the salt solutions according to the present invention is particularly effective to remove iodine ions of iodide ion, iodate ion and periodate ion, and suitably applied to the salt solutions containing these ions.

Further, according to the inventors, it is known that different forms of soluble silica may be contained in the salt solutions to be treated. For example, almost all of silica in the salt solution made from bay salt exists as soluble silica ion, but silica in the aforementioned well brine often coexists as non-dissociative neutral silica or colloidal silica besides silicic silica. In case of treating the salt solutions containing such non-dissociative neutral silica or colloidal silica, since zirconium hydroxide adsorbs selectively silicic ion as described above, silica components may be removed through contact with zirconium hydroxide after converting all the silica such as neutral silica, etc. into silicic ion by alkaline pre-processing.

In case of the salt solution containing both iodine and silica ions, the type of zirconium hydroxide to be used should be selected depending upon the form of iodine ions because any of zirconium hydroxide alone or zirconium hydroxide supporting ion exchange resins can be applied to remove silica ion. Furthermore, in case of the above well brine, iodide components may be removed through oxidation processing after removal of high content silica by alkaline pre-processing.

In the present invention, iodine and/or silica ions contained in salt solutions and zirconium hydroxide alone or zirconium-hydroxide supporting ion exchange resin are brought into contact with each other to remove iodine and/or silica ions in the salt solutions, and no restriction is imposed on the method of the above contact treatment. For example, there may be used well-known contact methods such as a method of supplying the salt solutions to be treated to zirconium hydroxide alone or zirconium-hydroxide supporting ion exchange resin through downflow or upflow while the zirconium hydroxide alone or zirconium-hydroxide supporting ion exchange resin is kept in a fixed-layer state, a method of bringing zirconium hydroxide alone or zirconium-hydroxide supporting ion exchange resin and salt solutions in a tank equipped with stirring mechanism in a slurry state, a method of supplying the salt solutions from the lower portion of a packed tower filled with zirconium-hydroxide supporting ion exchange resin to form a fluidized bed, and bring the salt solutions into contact with the zirconium-hydroxide supporting ion exchange resin, etc.

In the iodine and/or silica ions adsorbing step, the contact between iodine and/or silica ions contained in salt solutions and zirconium hydroxide alone or zirconium-hydroxide supporting ion exchange resin is performed under acidic condition. In this case, the acidity is set to pH 1 to 5, preferably to pH 2 to 3. If the pH value is lower than 1, zirconium hydroxide is partially dissolved, or sodium chlorate coexisting in the salt solutions is decomposed to generate chloride components. Therefore, a safety operation cannot be kept and this is unfavorable. On the other hand, if the pH value is higher than 5, the removal rate of iodine and/or silica ions are reduced, and this is also unfavorable.

The acidity of the above pH value can be kept by adding acid such as hydrochloric acid, nitric acid or the like. Usually, salt solution to be treated contains alkali metal chlorides, and thus hydrochloric acid is used. The contact temperature is set to the range from 0°C to 100°C, and preferably to the range from 40°C to 90°C. As the contact temperature is increased, the adsorption rate is increased, and purification rate of salt solutions is enhanced. Therefore, this is favorable. Further, no restriction is imposed on the salt concentration of the salt solution to be treated when iodine and/or silica ions are removed through adsorption, and thus general salt solutions having salt concentration of 15 to 26 weight % can be treated. The affinity between zirconium hydroxide and iodine and/or silica ions is large, and the adsorption can be performed irrespective of the concentration of the salt solutions. The inventors of this application are the first persons who have discovered the above fact. Accordingly, in the present invention, it is unnecessary to dilute or condense the salt solution to be treated, and there is an advantage that the operation is simplified.

In the present invention, after zirconium hydroxide or zirconium-hydroxide supporting ion exchange resin, serving as adsorbent, is brought into contact with iodine and/or silica ions contained in salt solution to adsorb iodine and/or silica ions, the adsorbent may be disposed, or reproduced and re-used after the adsorbed iodine and/or silica ions are desorbed. When the adsorbent is disposed after only one adsorption step is supported out, the desorbing step is unnecessary, and this process has an industrial merit from the viewpoint of the tradeoff between the cost of the adsorbent and the difficulties of disposal. Normally, iodine and/or silica ions adsorbed are desorbed from zirconium hydroxide or zirconium-hydroxide supporting ion exchange resin in a predetermined manner (condition) and then recycled for reuse.

In the iodine and/or silica ions desorbing step, zirconium hydroxide or zirconium-hydroxide supporting ion exchange resin which adsorbs iodine ions is brought into contact with an aqueous solution at a pH value of higher than the pH value in the adsorption step to separate iodine and/or silica ions from it for recycle. The pH value in the adsorption step is set to 7 to 14, and preferably to 9 to 13. In order to set the pH value to the above value, alkali agent such as caustic soda or the like is added. If the pH value is lower than 7, the desorption efficiency is low. On the other hand, if the pH value is higher than 14, a large amount of alkali is needed, and this is economically unfavorable.

No restriction is imposed on the method of bringing zirconium hydroxide or zirconium-hydroxide supporting ion exchange resin into contact with the aqueous solution of a predetermined pH value in the adsorption step. As in case of the adsorption step there may be suitably and selectively used the conventional contact method of performing the contact in the form of a fixed layer, a slurry state, a fluidized bed or the like. Further, the desorption temperature is set to 0°C to 100°C, preferably to 20°C to 70°C. As the desorption temperature is increased, the desorption rate is increased and the separability of aqueous solution is also enhanced. Therefore, this is favorable. However, when the temperature is excessively high, thermal energy of steam or the like to heat the aqueous solution is needed, and this is unfavorable.

In the present invention, before the above desorption treatment, the adsorbent such as zirconium hydroxide or the like after the adsorption of iodine and/or silica ions is subjected to a water washing treatment as occasion demands. Through the water-washing treatment after the adsorption, the amount of salt discharged to the outside of the system can be reduced. Further, the adsorbent such as zirconium hydroxide after the desorption is subjected to a water-washing treatment as occasion demands. The water-washing treatment after the desorption can reduce the amount of iodine and/or silica ions which are fed to the adsorption step together with the recycled adsorbent such as zirconium hydroxide or the like to be reused.

The iodine-ion adsorption and desorption steps may be alternately and repetitively performed in a predetermined manner in a single treatment tank. Besides, plural treatment tanks may be disposed to sequentially perform the adsorption and desorption steps in each treatment tank. Further, the adsorption and the desorption may be sequentially performed in different treatment tanks, and the adsorption/desorption steps may be sequentially performed while adsorbent such as zirconium hydroxide or the like is circulated between the steps. By sequentially performing the adsorption step and the desorption step as described above, iodine and/or silica ions can be removed from salt solution efficiently, stably and economically.

### Preferred Embodiments

Preferred embodiments according to the present invention will be described in detail, however, the present invention is not limited to the following embodiments.

Zirconium hydroxide alone containing water of 17.5 weight % and having an average particle size of 7.3 µm was used as the adsorbent used in the following embodiments. The zirconium-hydroxide supporting ion exchange resin was prepared by the following method. That is, 10-liter of cation exchange resin produced by Mitsubishi Chemical Corporation (Trade name: Diaion PK216, average particle size of 740µm) was poured into a polypropylene container, and then 20 liter of 2M(mole) zirconium oxychloride aqueous solution was added. The cation exchange resin was immersed in the above aqueous solution for 2 hours while suitably stirred. Then the zirconium oxychloride aqueous solution was removed by decantation, and water washing was performed at five times with pure water of 25 liters. The resin was poured into 2M caustic soda solution of 40 liters, and immersed for 1 hour while stirring the solution. The caustic soda solution was removed by decantation, and a water washing was performed at five times with pure water of 25 liters. The washing water in the fifth step was not wasted, and dense hydrochloric acid was dropped until the pH value of the system gets equal to 2.5. The solution was discarded by decantation, and after the 2M zirconium oxychloride solution of 20 liters was added, the same operation as described above was repeated until the step of dropping dense hydrochloric acid until the pH value of the system gets equal to 2.5, and finally zirconium-hydroxide supporting cation exchange resin was obtained by performing the supporting step twice. The amount of zirconium hydroxide supported on the ion exchange resin gets equal to about 9 mole.

### [Embodiments 1 to 6]

A mixture solution containing NaCl of 300g/l, Na₂SO₄ of 3g/l and NaIO₃ of 1.6mg/l was prepared by using sodium chloride, sodium sulfate and sodium iodate which were reagents. The mixture solution thus prepared was poured into each of six conical flasks by every 100ml and immersed in an isothermal tank to adjust the temperature of the solution to 50±1°C, and then the zirconium hydroxide alone of 10g (Embodiment 1), 5g (Embodiment 2), 2g(Embodiment 3), 1g(Embodiment 4), 0.5g (Embodiment 5) and 0.1g (Embodiment 6) was added into each flask. Further, hydrochloric acid was dropped into the solution in each flask while stirring the solution, and the contact treatment was conducted for 15 minutes with keeping the pH value of the solution at 3. Supernatant liquor after the treatment was filtrated and collected, and then iodine components were analyzed by using the absorptiometry to measure the iodine removal rate. The result is shown in the following table 1. From Embodiments 1 to 6, it is clear that iodate ions can be effectively removed by performing the contact treatment on zirconium hydroxide alone and iodate-ion contained in salt solution.

**Table 1**

| Embodiment | Amount of Zirconium Hydroxide Added (g) | Iodine(Iodate ion) Removal Rate (%) |
|---|---|---|
| 1 | 10 | 99 |
| 2 | 5 | 99 |
| 3 | 2 | 99 |
| 4 | 1 | 98 |
| 5 | 0.5 | 96 |
| 6 | 0.1 | 71 |

### [Embodiments 7 to 9]

A mixture solution containing NaCl of 300g/l, Na₂SO₄ of 3g/l and NaIO₄ of 1.7mg/l was prepared by using sodium chloride, sodium sulfate and sodium periodate which were reagents. The mixture solution thus prepared was poured into each of three conical flasks by every 100ml and immersed in an isothermal tank to adjust the temperature of the solution to 50±1°C, and then the zirconium hydroxide alone of 10g (Embodiment 7), 5g (Embodiment 8) and 1g (Embodiment 9) was added into each flask. Further, hydrochloric acid was dropped into the solution in each flask while stirring the solution, and the contact treatment was conducted for 15 minutes with keeping the pH value of the solution at 3. Supernatant liquor after the treatment was filtrated and collected, and then iodine components were analyzed in the same manner as Embodiment 1 to measure the iodine removal rate. The result is shown in the following table 2. From Embodiments 7 to 9, it is clear that periodate ion can be effectively removed by performing the contact treatment on zirconium hydroxide alone and periodate-ion contained in salt solutions.

**Table 2**

| Embodiment | Amount of Zirconium Hydroxide Added (g) | Iodine(Periodate Ion) Removal Rate (%) |
|---|---|---|
| 7 | 10 | 100 |
| 8 | 5 | 100 |
| 9 | 1 | 97 |

### [Embodiments 10 to 15]

The same mixture solution as Embodiment 1 was poured into each of six conical flasks by every 100ml, and immersed in an isothermal tank to adjust the temperature of the solution to 50±1°C. Thereafter, the zirconium-hydroxide supporting cation exchange resin (merely referred to as "supporting resin") of 30g (Embodiment 10), 20g (Embodiment 11), 15g (Embodiment 12), 10g (Embodiment 13), 5g (Embodiment 14), 1g (Embodiment 15) which was prepared as described above was added to each flask. Further, hydrochloric acid was dropped into the solution in each flask while stirring the solution, and the contact treatment was conducted for 20 minutes with keeping the pH value of the solution at 3. Supernatant liquor after the treatment was filtrated and collected, and then iodine components were analyzed in the same manner as Embodiment 1 to measure the iodine removal rate. The result is shown in the following table 3. From Embodiments 10 to 15, it is clear that iodate ion can be effectively removed by performing the contact treatment on zirconium-hydroxide supporting ion exchange resin and iodate-ion contained in salt solution.

**Table 3**

| Embodiment | Amount of Supporting Resin Added (g) | Iodine (Iodate Ion) Removal Rate (%) |
|---|---|---|
| 10 | 30 | 98 |
| 11 | 20 | 95 |
| 12 | 15 | 90 |
| 13 | 10 | 88 |
| 14 | 5 | 85 |
| 15 | 1 | 32 |

### [Embodiments 16 to 18]

The same mixture solution as Embodiment 7 was poured into each of three conical flasks by every 100ml, and immersed in an isothermal tank to adjust the temperature of the solution to 50±1°C. Thereafter, the zirconium-hydroxide supporting cation exchange resin (merely referred to as "supporting resin") of 10g(Embodiment 16), 5g(Embodiment 17), 1g (Embodiment 18) which was prepared as described above was added to each flask. Further, hydrochloric acid was dropped into the solution in each flask while stirring the solution, and the contact treatment was conducted for 20 minutes with keeping the pH value of the solution at 3. Supernatant liquor after the treatment was filtrated and collected, and then iodine components were analyzed in the same manner as Embodiment 1 to measure the iodine removal rate. The result is shown in the following table 4. From Embodiments 16 to 18, it is clear that periodate ion can be effectively removed by performing the contact treatment on zirconium-hydroxide supporting ion exchange resin and periodate-ion contained in salt solution.

**Table 4**

| Embodiment | Amount of Supporting Resin Added (g) | Iodine (Periodate Ion) Removal Rate (%) |
|---|---|---|
| 16 | 10 | 99 |
| 17 | 5 | 97 |
| 18 | 1 | 76 |

### [Embodiments 19 to 22]

A mixture solution containing NaCl of 300g/l, Na₂SO₄ of 3g/l and NaI of 1.2mg/l was prepared by using sodium chloride, sodium sulfate and sodium iodide which were reagents. The mixture solution thus prepared was poured into each of four conical flasks by every 100ml and immersed in an isothermal tank to adjust the temperature of the solution to 50±1°C, and then the zirconium-hydroxide supporting cation exchange resin (hereinafter referred to as "supporting resin") of 50g(Embodiment 19), 30g(Embodiment 20) and 20g(Embodiment 21) and 10g (Embodiment 22) was added into each flask. Further, hydrochloric acid was dropped into the solution in each flask while stirring the solution, and the contact treatment was conducted for 15 minutes with keeping the pH value of the solution at 3. Supernatant liquor after the treatment was filtrated and collected, and then iodine components were analyzed in the same manner as Embodiment 1 to measure the iodine removal rate. The result is shown in the following table 5. From Embodiments 19 to 22, it is clear that iodine ions can be effectively removed by performing the contact treatment on zirconium hydroxide supporting ion exchange resin and iodine-ion contained in salt solutions.

**Table 5**

| Embodiment | Amount of Supporting Resin Added (g) | Iodine (NaI) Removal Rate (%) |
|---|---|---|
| 19 | 50 | 77 |
| 20 | 30 | 48 |
| 21 | 20 | 32 |
| 22 | 10 | 20 |

### [Embodiment 23]

A mixture solution containing NaCl of 220g/l, Na₂SO₄ of 7g/l and NaIO₃ of 0.5mg/l was prepared by using sodium chloride, sodium sulfate and sodium iodate which were reagents. The mixture solution of 300ml thus prepared was immersed in an isothermal tank to adjust the temperature of the solution to 50±1°C, and zirconium oxychloride (30 weight % solution) of 30 millimole was added. Thereafter, caustic soda (30-weight %) was dropped to adjust the pH value of the solution to 9 to generate zirconium hydroxide in a slurry form. Thereafter, hydrochloric acid was dropped to adjust the pH value of the slurry to 3, and the reaction was conducted while keeping the pH value. Supernatant liquor after the reaction was filtrated, and then iodine components were analyzed in the same manner as Embodiment 1 to measure the iodine removal rate. As a result, 98% of the iodine components was removed. Accordingly, it is clear that the iodate ion can be removed by conducting the contact treatment of the iodate-ion contained in salt solution and the slurried zirconium hydroxide.

### [Embodiments 24 to 28]

A mixture solution containing NaCl of 300g/l, Na₂SO₄ of 3g/l and Na₂SiO₃ of 20.3mg/l was prepared by using sodium chloride, sodium sulfate and sodium silicate which were reagents. The mixture solution thus prepared was poured into each of five conical flasks by every 100ml and immersed in an isothermal tank to adjust the temperature of the solution to 50±1°C, and then the zirconium hydroxide alone of 10g(Embodiment 24), 5g(Embodiment 25), 2g(Embodiment 26), 1g(Embodiment 27) and 0.5g(Embodiment 28) was added into each flask. Further, hydrochloric acid was dropped into the solution in each flask while stirring the solution, and the contact treatment was conducted for 15 minutes with keeping the pH value of the solution at 3. Supernatant liquor after the treatment was filtrated and collected, and then silica components were analyzed by using the IPC emission spectral analysis to measure the silica removal rate. The result is shown in the following table 6. From Embodiments 24 to 28, it is clear that silica ion can be effectively removed by performing the contact treatment on zirconium hydroxide alone and silica ion contained in salt solution.

**Table 6**

| Embodiment embodiment | Amount of Zirconium Hydroxide Added (g) | Silica(Sodium Silicate) Removal Rate (%) |
|---|---|---|
| 24 | 10 | 96 |
| 25 | 5 | 92 |
| 26 | 2 | 82 |
| 27 | 1 | 76 |
| 28 | 0.5 | 52 |

### [Embodiments 29 to 33]

A mixture solution containing NaCl of 300g/l, Na₂SO₄ of 3g/l and Na₂SiO₃ of 20.3mg/l was prepared by using sodium chloride, sodium sulfate and sodium silicate which were reagents. The mixture solution thus prepared was poured into each of five conical flasks by every 100ml and immersed in an isothermal tank to adjust the temperature of the solution to 50±1°C, and then the zirconium hydroxide supporting resin of 30g(Embodiment 25), 20g(Embodiment 26), 15g(Embodiment 27), 10g(Embodiment 28) and 5g(Embodiment 29) was added into each flask. Further, in the same manner as Embodiment 10, hydrochloric acid was dropped into the solution in each flask while stirring the solution, and the contact treatment was conducted for 20 minutes with keeping the pH value of the solution at 3. Supernatant liquor after the treatment was filtrated and collected, and then silica components were analyzed in the same manner as Embodiment 24 to measure the silica removal rate. The result is shown in the following table 7. From Embodiments 29 to 33, it is clear that silica removal rate can be enhanced as the amount of zirconium hydroxide supporting resin increases.

**Table 7**

| | | |
|---|---|---|
| Embodiment | Amount of Supporting Resin Added (g) | Silica(Sodium Silicate) Removal Rate (%) |
| 29 | 30 | 92 |
| 30 | 20 | 85 |
| 31 | 15 | 80 |
| 32 | 10 | 65 |
| 33 | 5 | 25 |

### [Embodiments 34 to 38]

A mixture solution containing NaCl of 200g/l, Na₂SO₄ of 5g/l and Na₂SiO₃ of 12.2mg/l was prepared by using sodium chloride, sodium sulfate and sodium silicate which were reagents. The mixture solution thus prepared was poured into each of five conical flasks by every 100ml and immersed in an isothermal tank to adjust the temperature of the solution to 50±1°C, and then the zirconium hydroxide alone of 10g(Embodiment 34), 5g(Embodiment 35), 2g(Embodiment 36), 1g(Embodiment 37) and 0.5g(Embodiment 38) was added into each flask. Further, hydrochloric acid was dropped into the solution in each flask while stirring the solution, and the contact treatment was conducted for 15 minutes with keeping the pH value of the solution at 3. Supernatant liquor after the treatment was filtrated and collected, and then silica components were analyzed by using the same method as Embodiment 24 to measure the silica removal rate. The result is shown in the following table 8. From Embodiments 34 to 38, it is clear that silica ion can be effectively removed by performing the contact treatment on zirconium hydroxide alone and silica ion contained in salt solution.

**Table 8**

| Embodiment | Amount of Zirconium Hydroxide added (g) | Silica(Sodium Silicate) Removal Rate (%) |
|---|---|---|
| 34 | 10 | 98 |
| 35 | 5 | 95 |
| 36 | 2 | 88 |
| 37 | 1 | 78 |
| 38 | 0.5 | 54 |

### [Embodiments 39 to 43]

A mixture solution containing NaCl of 300g/l, Na₂SO₄ of 8g/l, NaIO₃ of 1.6mg/l and Na₂SiO₃ of 20.3mg/l was prepared by using sodium chloride, sodium sulfate, sodium iodate and sodium silicate which were reagents. The mixture solution thus prepared was poured into each of five conical flasks by every 100ml and immersed in an isothermal tank to adjust the temperature of the solution to 50±1°C, and then the zirconium hydroxide supporting ion exchange resin of 30g(Embodiment 39), 20g(Embodiment 40), 15g(Embodiment 41), 10g(Embodiment 42) and 5g(Embodiment 43) was added into each flask. Further, hydrochloric acid was dropped into the solution in each flask while stirring the solution, and the contact treatment was conducted for 20 minutes with keeping the pH value of the solution at 3. Supernatant liquor after the treatment was filtrated and collected, and then iodine components were analyzed by using the same method as Embodiment 1 to measure the iodine removal rate. And silica components were analyzed by using the same method as Embodiment 24 to measure the silica removal rate. The result is shown in the following table 9. From Embodiments 39 to 43, it is clear that removal rate of iodate and silica ions can be enhanced as the amount of zirconium hydroxide supporting ion exchange resin is increased.

**Table 9**

| Embodiment | Amount of Zirconium Hydroxide Supporting Resin Added (g) | Iodine(Sodium Iodate) Removal Rate (%) | Silica(Sodium Silicate) Removal Rate (%) |
|---|---|---|---|
| 39 | 30 | 98 | 92 |
| 40 | 20 | 95 | 85 |
| 41 | 15 | 90 | 80 |
| 42 | 10 | 88 | 65 |
| 43 | 5 | 85 | 25 |

### [Embodiment 44]

A mixture solution containing NaCl of 300g/l, Na₂SO₄ of 7g/l and Na₂SiO₃ of 20.3mg/l was prepared by using sodium chloride, sodium sulfate and sodium silicate which were reagents. The mixture solution of 300ml thus prepared was immersed in an isothermal tank to adjust the temperature of the solution to 50±1°C, and zirconium oxychloride (30 weight % solution) of 30 milli-mole was added. Thereafter, caustic soda (30-weight %) was dropped to adjust the pH value of the solution to 9 to generate zirconium hydroxide in a slurry form. Thereafter, hydrochloric acid was dropped to adjust the pH value of the slurry to 3, and the reaction was conducted 15 minutes while keeping the pH value. Supernatant liquor after the reaction was filtrated, and then silica components were analyzed in the same manner as Embodiment 24 to measure the silica removal rate. As a result, 95% of the silica components was removed. Accordingly, it is clear that the silica ion can be removed by conducting the contact treatment of the silica ion contained in salt solution and the slurried zirconium hydroxide.

### [Embodiments 45]

Using sodium chloride, sodium sulfate, sodium silicate of reagents and colloidal silica solution of concentration of 30 weight % on the market (manufacturer: NIHONKAGAKU), a mixed salt solution containing NaCl of 300g/l, Na₂SO₄ of 3g/l, silicic ion of 10mg/l as SiO₂ (analyzed by absorptiometry using ammonium molybdate) and colloidal silica of 5mg/l as SiO₂ (measured as a difference between total silica value analyzed by IPC emission spectrophotometry and silica acid value analyzed by ammonium molybdate absorptiometry) was prepared. After being dissolved sodium bicarbonate (NaHCO₂) of 2g per salt solution of one liter, thus prepared salt solution was immersed into a boiling bath for 60 minutes and then left for cooling down to ambient temperature. After that the pH value of the salt solution was adjusted to 5 by adding hydrochloric acid. When analyzing the silica components in thus treated salt solution by ammonium molybdate absorptiometry, it was found that all the silica components were converted to silicic ion.

The mixture solution thus prepared was poured into a conical flask by 100ml and immersed in an isothermal tank to adjust the temperature of the solution to 50±1°C, and then the zirconium hydroxide alone of 15g was added into the flask. Further, hydrochloric acid was dropped into the solution in flask while stirring the solution, and the contact treatment was conducted for 20 minutes with keeping the pH value of the solution at 3. Supernatant liquor after the treatment was filtrated and collected, and then silica components were analyzed by using the same method as Embodiment 24 to measure the silica removal rate. The silica removal rate was found 95 %. Through this Embodiment 45, it is confirmed that the silica components can be removed through making the salt solution after pre-alkali treatment contact with zirconium hydroxide in case colloidal silica is contained in the salt solutions.

### [Embodiment 46]

A mixture solution containing NaCl of 300g/l, Na₂SO₄ of 7g/l and NaIO₃ of 1.6mg/l was prepared by using sodium chloride, sodium sulfate and sodium iodate which were reagents. Hydrochloric acid was dropped to adjust the pH value of the mixture solution to 3. Further, zirconium hydroxide of 50 g was dispersed into salt solution (NaCl concentration of 100 g/l) of 500ml, and then filtrated under reduced-pressure to form a zirconium-hydroxide cake layer to which mother liquor of the salt solution was adhered. The mixture solution thus prepared was supplied at a flow rate of 200 ml/hour to pass through the cake layer for 300 hours while keeping the temperature of the mixture solution at 50°C to remove iodine from the mixture solution by adsorption. Thereafter, alkali water of pH13 was supplied at a flow rate of 200 ml/hour to pass through the cake layer for 50 hours while keeping the temperature at 50°C to subject the cake layer to an alkali washing treatment, thereby removing iodine from the cake layer by desorption. Further, water of pH2 was supplied at a flow rate of 500 ml/hour to pass through the alkali-washed cake layer for 100 hours while keeping the temperature of the water at 50°C to regenerate and recycle zirconium hydroxide. The adsorption-removal step of removing iodine from the mixture solution, the desorption step of desorbing iodine adsorbed by the cake layer and the regeneration and recycle step of zirconium hydroxide are set as one cycle, and the cycle was made at five times. The iodine removal rate from the mixture salt solution that was treated through all the cycles was equal to 95% or more. It is clear from this result that when zirconium hydroxide is used as adsorbent for iodine ions, the adsorption capability of zirconium hydroxide can be regenerated and it is repetitively used by subjecting zirconium hydroxide to alkali treatment to desorb the adsorbed iodine ions after the iodine ions are adsorbed by the zirconium hydroxide.

### [Embodiment 47]

A mixture solution containing NaCl of 300g/l, Na₂SO₄ of 7g/l and Na₂SiO₃ of 20.3mg/l was prepared by using sodium chloride, sodium sulfate and sodium silicate which were reagents. Hydrochloric acid was dropped to adjust the pH value of the mixture solution to 3. Further, zirconium hydroxide of 50 g was dispersed into salt solution (NaCl concentration of 100 g/l) of 500ml, and then filtrated under reduced-pressure to form a zirconium-hydroxide cake layer to which mother liquor of the salt solution was adhered. The mixture solution thus prepared was supplied at a flow rate of 200 ml/hour to pass through the cake layer for 300 hours while keeping the temperature of the mixture solution at 50°C to remove silica from the mixture solution by adsorption. Thereafter, zirconium hydroxide was regenerated through quite the same procedure as Embodiment 46. By using the cake layer of the regenerated zirconium hydroxide, the silica contents contained in the salt solution were removed again in the same manner as Embodiment 46 by passing the mixture solution through the cake layer. The adsorption-removal step of removing silica from the mixture solution, the desorption step of desorbing silica adsorbed by the cake layer and the regeneration and recycle step of zirconium hydroxide are set as one cycle, and the cycle was made at five times. The silica removal rate from the mixture salt solution that was treated through all the cycles was equal to 90% or more. It is clear from this result that when zirconium hydroxide is used as adsorbent for silica ion, the adsorption capability of zirconium hydroxide can be regenerated and it is repetitively used by subjecting zirconium hydroxide to alkali treatment to desorb the adsorbed silica ion after the silica ion is adsorbed by the zirconium hydroxide.

According to the method of purification of electrolysis-use salt solutions in the present invention, zirconium hydroxide is used as adsorbent to remove through adsorption iodine and/or silica ions which are contained at concentration of ppm order in the salt solution and give adverse effects on electrolysis and it can also more selectively and more highly efficiently remove iodine and/or silica ions as compared with the conventional methods. Further, the method of the present invention is applicable irrespective of the type of salt solutions and the concentration of salt. In addition, adsorbed iodine and/or silica ions are desorbed to recycle adsorbent, and thus the adsorbent can be repetitively used. Therefore, the method of the present invention is excellent in economy and industrial practical use. Further, the method of the present invention can remove iodine and/or silica ions from salt solutions so that the concentration of iodine ions is reduced to 0.2ppm or less and concentration of silica ion to 5ppm or less if needed at the level of which no adverse effect is made on the electrolysis of the salt solutions by an ion exchange membrane method. Accordingly, the method of the present invention is effective to the electrolysis of salt solutions.

## Claims

1. A method of purifying a salt solution for electrolysis comprising the step of removing iodine ions and/or silica ions by contacting the salt solution with zirconium hydroxide under acidic conditions.

2. A method of purifying a salt solution according to Claim 1, wherein said zirconium hydroxide is supported on a cation exchange resin.

3. A method of purifying a salt solution according to Claim 1 or Claim 2, comprising:
an adsorption step in which the salt solution and zirconium hydroxide are brought into contact resulting in the iodine ions and/or the silica ions being adsorbed by the zirconium hydroxide;
a desorption step in which the zirconium hydroxide with the adsorbed impurities is brought into contact with an aqueous solution at a pH value of higher than the pH value in said adsorption step to desorb the adsorbed impurities from the zirconium hydroxide; and
conducting said adsorption and desorption steps alternately in a single vessel or each of both steps continuously in separate vessels.

4. A method of purifying a salt solution according to Claim 3, wherein said adsorption step and said desorption step are sequentially performed in different treatment vessels, and zirconium hydroxide is circulated between said steps.

5. A method of purifying a salt solution according to any preceding Claim, further comprising pre-treating the salt solution to convert neutral and/or colloidal silica contained in the solution into silicic ions.

6. A method of purifying a salt solution according to Claim 5, wherein said pre-treatment step is an alkali treatment.

7. A method of purifying a salt solution according to any preceding Claim, wherein said zirconium hydroxide is supported on a cation exchange resin.

## Patentansprüche

1. Verfahren zur Reinigung einer Salzlösung für die Elektrolyse, umfassend den Schritt der Entfernung von Iodionen und/oder Silicaionen durch Kontaktieren der Salzlösung mit Zirkoniumhydroxid unter sauren Bedingungen.

2. Verfahren zur Reinigung einer Salzlösung gemäß Anspruch 1, worin das Zirkoniumhydroxid auf ein Kationenaustauschharz aufgebracht ist.

3. Verfahren zur Reinigung einer Salzlösung gemäß Anspruch 1 oder 2, umfassend:
einen Adsorptionsschritt, in dem die Salzlösung und das Zirkoniumhydroxid in Kontakt gebracht werden, was dazu führt, dass die Iodionen und/oder Silicaionen durch das Zirkoniumhydroxid adsorbiert werden;
einen Desorptionsschritt, in dem das Zirkoniumhydroxid mit den adsorbierten Verunreinigungen bei einem pH-Wert höher als dem pH-Wert des Absorptionsschritts mit einer wässrigen Lösung in Kontakt gebracht wird, um die adsorbierten Verunreinigungen von dem Zirkoniumhydroxid zu desorbieren; und
Durchführung der Adsorptions- und Desorptionsschritte, entweder abwechselnd in einem einzelnen Gefäß oder jeden der beiden Schritte kontinuierlich in getrennten Gefäßen.

4. Verfahren zur Reinigung einer Salzlösung gemäß Anspruch 3, worin der Adsorptionsschritt und der Desorptionsschritt aufeinander folgend in unterschiedlichen Behandlungsgefäßen durchgeführt werden, und das Zirkoniumhydroxid zwischen den Schritten zirkuliert wird.

5. Verfahren zur Reinigung einer Salzlösung gemäß einem der vorhergehenden Ansprüche, ferner umfassend die Vorbehandlung der Salzlösung, um in der Lösung enthaltenes neutrales und/oder kolloidales Silica in Kieselsäureionen umzuwandeln.

6. Verfahren zur Reinigung einer Salzlösung gemäß Anspruch 5, worin der Vorbehandlungsschritt eine alkalische Behandlung ist.

7. Verfahren zur Reinigung einer Salzlösung gemäß einem der vorhergehenden Ansprüche, worin das Zirkoniumhydroxid auf ein Kationenaustauschharz aufgebracht ist.

## Revendications

1. Procédé de purification d'une solution saline pour une électrolyse comprenant l'étape d'élimination des ions d'iode et/ou des ions de silice par mise en contact de la solution saline avec de l'hydroxyde de zirconium dans des conditions acides.

2. Procédé de purification d'une solution saline selon la revendication 1, dans lequel ledit hydroxyde de zirconium est supporté sur une résine échangeuse de cations.

3. Procédé de purification d'une solution saline selon la revendication 1 ou la revendication 2, comprenant :
une étape d'adsorption dans laquelle la solution saline et l'hydroxyde de zirconium sont mis en contact conduisant à l'adsorption des ions d'iode et/ou des ions de silice par l'hydroxyde de zirconium ;
une étape de désorption dans laquelle l'hydroxyde de zirconium avec les impuretés adsorbées est mis en contact avec une solution aqueuse à une valeur de pH supérieure à la valeur de pH dans ladite étape d'adsorption pour désorber les impuretés adsorbées de l'hydroxyde de zirconium ; et
la réalisation desdites étapes d'adsorption et de désorption alternativement dans un seul récipient ou chacune des deux étapes en continu dans des récipients séparés.

4. Procédé de purification d'une solution saline selon la revendication 3, dans lequel ladite étape d'adsorption et ladite étape de désorption sont réalisées successivement dans des récipients de traitement différents, et l'hydroxyde de zirconium est mis en circulation entre lesdites étapes.

5. Procédé de purification d'une solution saline selon l'une quelconque des revendications précédentes, comprenant en outre le pré-traitement de la solution saline pour convertir la silice neutre et/ou colloïdale contenue dans la solution en ions siliciques.

6. Procédé de purification d'une solution saline selon la revendication 5, dans lequel ladite étape de pré-traitement est un traitement alcalin.

7. Procédé de purification d'une solution saline selon l'une quelconque des revendications précédentes, dans lequel ledit hydroxyde de zirconium est supporté sur une résine échangeuse de cations.
